# FASCICULE DE BREVET EUROPEEN

(11) **EP 0 737 109 B1**
(45) Date de publication et mention de la délivrance du brevet: **01.04.1998**
(21) Numéro de dépôt: 95905573.2
(22) Date de dépôt: 21.12.1994
(51) Int. Cl.: B02C 17/22

(54) **ELEMENT DE BLINDAGE POUR BROYEUR ROTATIF ET BROYEUR EQUIPE DE TELS ELEMENTS**
PANZERUNGSELEMENT FÜR ROHRMÜHLE UND ROHRMÜHLE VERSEHEN MIT SOLCHEN ELEMENTEN
LINING MEMBER FOR A ROTARY GRINDER AND GRINDER PROVIDED THEREWITH

(30) Priorité: 29.12.1993 BE 9301481
(43) Date de publication de la demande: 16.10.1996
(73) Titulaire: SLEGTEN, SOCIETE ANONYME, B-1348 Louvain-La-Neuve (BE)
(72) Inventeur: BRISBOIS, Jean-Marie, B-1325 Dion-le-Mont (BE)
(74) Mandataire: Van Malderen, Joelle
(86) Numéro de dépôt international: EP9404266
(87) Numéro de publication internationale: WO9517968

(56) Documents cités:
- DE-B- 1 161 110
- FR-A- 2 054 238
- FR-A- 2 213 808
- GB-A- 1 284 053

## Description

### Objet de l'invention.

La présente invention concerne un élément de blindage pour broyeur rotatif destiné à faire partie du revêtement de la paroi intérieure de la virale d'un broyeur rotatif contenant une charge d'engins broyants, comprenant une face extérieure cylindrique lisse pour épouser la surface intérieure de la virole et une face cylindrique intérieure. L'invention concerne également un broyeur rotatif comprenant une virole cylindrique dont le blindage intérieur est constitué de tels éléments.

### Arrière-plan technologique et état de la technique à la base de l'invention.

L'invention concerne aussi bien le domaine des broyeurs en voie humide que celui des broyeurs en voie sèche, notamment ceux utilisés en cimenterie ou dans l'industrie minière pour le concassage et le broyage des minerais. Ces broyeurs sont constitués d'une virole cylindrique tournant autour de son axe longitudinal et contenant une charge broyante constituée d'engins broyants, généralement des boulets, mais pouvant également être constituée de cylpebs, boulpebs, etc. de dimensions différentes. La matière à broyer est introduite d'un côté du broyeur et, au fur et à mesure de sa progression vers la sortie, du côté opposé, elle est broyée et concassée entre les engins broyants.

Etant donné que le broyage est réalisé progressivement dans le sens de la traversée du broyeur, les meilleures conditions de broyage sont réalisées lorsque la taille des engins broyants est adaptée à celle de la matière à broyer. Autrement dit, les engins broyants les plus gros devraient, de préférence, se concentrer du côté de l'entrée du broyeur, alors que les plus petits devraient se regrouper du côté de la sortie. C'est ce que l'on appelle le classement des engins broyants en fonction de leur taille. Dans les conditions optimales, ce classement devrait donc se réaliser automatiquement pendant le fonctionnement du broyeur.

Pour réaliser ce classement, il est connu de prévoir des blindages constitués de plaques dont la surface intérieure délimite dans le broyeur une succession de volumes tronconiques évasés vers l'entrée du broyeur, c'est-à-dire que le blindage présente, en coupe longitudinale, un profil en dents de scie. Ces surfaces inclinées ont tendance à refouler les engins broyants les plus gros vers l'entrée du broyeur et, par voie de conséquence, les engins les plus petits en direction de la sortie, si bien que la dimension des engins broyants diminue au fur et à mesure que la finesse de la matière de la matière à broyer augmente.

Grâce à ce classement des corps broyants dans les broyeurs, on arrive à réduire la consommation énergétique de l'ordre de 11 à 15 %, ce qui est appréciable à cette époque.

L'idée de classer avec une plaque ondulée dont les ondes présentent un angle avec la génératrice du broyeur apparaît déjà dans le brevet FR-A-2213808. Toutefois, ce brevet combine nécessairement ladite plaque ondulée avec une autre plaque de forme tronconique. Ceci signifie que le principe de base du classement dans ce cas reste le principe bien connu de la forme tronconique.

Le brevet DE-B-1161110 décrit une plaque plate ondulée. Néanmoins, cette plaque s'efforce de reproduire l'effet tronconique par la présence d'une profondeur décroissante des ondes au sein même de ladite plaque. En outre, ce document DE-B-1161110 ne mentionne pas la possibilité de donner aux ondulations un angle par rapport à la génératrice du broyeur. Il convient de noter que si ce document décrit également un élément transversal, celui-ci présente une hauteur qui ne dépasse pas la hauteur maximale des ondes. Cet élément transversal sert en réalité à diminuer la tendance de la matière à retourner vers l'entrée et non au classement, ainsi que mentionné colonne 3, lignes 13 et suivantes.

Le document FR-A-2054238 mentionne l'existence d'un "anneau". Néanmoins, la fonction première de cet anneau est de freiner l'avancement du matériau à broyer tout en ne perturbant pas l'effet de classement du blindage au sein duquel cet anneau est placé. Il est vrai qu'incidemment, un classement imparfait peut être obtenu par la présence de cet anneau en combinaison avec des plaques "pourvues d'ondulations parallèles ou obliques à l'axe du broyeur ou de toutes aspérités ou creux susceptibles de créer un relevage approprié". Il convient de noter que cet anneau présente un diamètre qui vaut 18 à 20 % du diamètre intérieur du broyeur. Cet anneau est donc destiné à effectuer essentiellement un relevage et non un classement. Quant aux ondulations, elles sont clairement citées pour assurer également le relevage et non le classement.

Un autre type d'anneau creux est évoqué dans le document GB-A-1,284,053. Néanmoins, le but poursuivi par cet anneau est également de relever la matière en créant une structure qui soit légère et résistante à l'usure. Le classement n'est évoqué nulle part dans ce document.

Par conséquent, les blindages proposant d'utiliser des ondulations dans les plaques en vue d'un classement font toujours appel à une forme tronconique. Or, le fait d'utiliser un blindage classant de forme tronconique présente un inconvénient particulièrement important en raison de l'épaisseur du blindage qu'entraîne ladite forme tronconique.

Un autre inconvénient plus important encore est le volume occupé par le blindage tronconique à l'intérieur de la virole. Plus il est épais, plus son volume est grand et plus le volume utile, c'est-à-dire le volume utilisable par les boulets et la matière se réduit. Pareil inconvénient rend le blindage classant tronconique inutilisable pour certains types de broyeurs. En effet, il existe des broyeurs présentant des blindages plats et très releveurs sans effet classant. En raison du large volume utile et d'un effet de relevage important, ces broyeurs absorbent beaucoup de puissance. Le fait de proposer un blindage classant tronconique dans pareils cas permet d'améliorer le rendement. Néanmoins, le fait de proposer un blindage tronconique réduit le volume utile, et donc, le broyeur est chargé d'une plus petite quantité de boulets. Ayant moins de boulets à relever, la puissance absorbée diminue. En outre, un tel blindage favorise le glissement et il relève moins que le blindage initial plat, ce qui diminue aussi la puissance absorbée. A titre d'exemple, on peut estimer, en remplaçant un blindage plat par un blindage tronconique, que l'on améliore le rendement par exemple de 13 % tout en obtenant une puissance réduite de 18 %. Dans ce cas, le broyeur produira un débit de 5 % inférieur à celui obtenu en utilisant un blindage plat. Or, dans certains cas, il est nécessaire de conserver le débit maximum d'une installation, et le fait de proposer un blindage classant tronconique s'avère irréalisable.

Ce problème est particulièrement fréquent, en particulier dans les broyeurs utilisés en Amérique du Nord.

### Buts de l'invention.

La présente invention vise à proposer un blindage qui classe tout en proposant un même volume utile que dans le cas des blindages plats.

La présente invention vise donc à proposer un blindage qui permet de conserver la même puissance absorbée que dans le cas de l'utilisation d'un blindage plat mais où on obtient également une amélioration du rendement qui peut donc se convertir en augmentation de débit.

La présente invention vise donc à proposer à l'utilisateur d'un broyeur un blindage classant présentant un avantage économique non négligeable.

### Principaux éléments caractéristiques de la présente invention.

Pour atteindre cet objectif, on propose un élément de blindage pour broyeur rotatif destiné à faire partie du revêtement de la paroi intérieure de la virole d'un broyeur rotatif contenant une charge d'engins broyants, comprenant une face cylindrique extérieure lisse pour épouser la surface intérieure de la virole et une face cylindrique intérieure qui comporte sur au moins une partie de sa longueur des ondulations longitudinales dont au moins une section longitudinale est inclinée par rapport à la génératrice du broyeur et à son sens de rotation, caractérisé en ce que ladite face cylindrique intérieure n'engendre aucun volume tronconique et en ce qu'elle comporte un nez radial transversal, en saillie par rapport au reste de la face intérieure, dont la hauteur est inférieure à 10% du diamètre du broyeur.

Alors que, dans les broyeurs connus à surface inclinée, on compte sur une migration sélective des engins broyants qui, suivant leur taille, sont plus ou moins refoulés vers l'entrée du broyeur sous l'action des surfaces inclinées et du poids variable des engins broyants, la présente invention est basée sur l'effet combiné des ondes inclinées et du nez radial transversal qui provoque, suivant la taille des engins, une migration sélective de ceux-ci respectivement vers l'entrée et la sortie du broyeur. Autrement dit, alors que, dans les broyeurs connus, on vise une ségrégation naturelle des engins broyants le long des surfaces inclinées, les éléments de broyage selon la présente invention, par suite de l'inclinaison de leurs ondulations, provoquent une ségrégation forcée des engins broyants suivant leur taille, ce qui résulte en un meilleur classement. En outre, l'absence de volumes tronconiques augmente la surface utile du broyeur et réduit son poids.

L'élément de blindage comporte, de préférence, dans le sens de la longueur, trois sections dont la première est pourvue d'ondulations inclinées par rapport à la génératrice du broyeur, dont la seconde est pourvue d'ondulations parallèles à la génératrice du broyeur et dont la troisième est pourvue d'ondulations parallèles ou inclinées par rapport à la génératrice et s'étendant jusqu'au nez transversal.

Selon une forme d'exécution préférée, les ondulations horizontales peuvent avoir une profondeur différente, celles de la deuxième et de la troisième section ayant une profondeur identique et celles de la première section présentant une profondeur plus grande, la profondeur des ondulations ne variant pas au sein de chaque section.

Le nez transversal présente, de préférence, une section trapézoïdale, la face tournée vers l'entrée du broyeur étant légèrement inclinée par rapport à un plan diamétral du broyeur.

La face arrière du nez transversal qui est tournée vers la sortie du broyeur peut également comporter des ondulations.

L'invention prévoit également un broyeur rotatif comprenant une virole cylindrique garnie d'un blindage intérieur qui est caractérisé en ce que ledit blindage est constitué, sur au moins une partie de la longueur du broyeur, d'éléments de blindage tels que décrits ci-dessus et présente une succession de surfaces cylindriques ondulées entrecoupées par des anneaux formés par lesdits nez transversaux des éléments de blindage.

D'autres particularités et caractéristiques de l'invention ressortiront de la description détaillée de deux modes de réalisation préférés, présentés ci-dessous, à titre d'illustration, en référence aux dessins annexés.

### Brève description des figures.

- Les figures 1a et 2a: représentent respectivement des vues en plan et en coupe longitudinale d'un premier mode de réalisation d'éléments de blindage selon la présente invention.
- Les figures 1b et 2b: représentent des vues analogues d'un second mode de réalisation d'éléments de blindage selon la présente invention.
- La figure 3: représente schématiquement une coupe transversale selon le plan de coupe III-III de la figure 1a.
- La figure 4: représente schématiquement une section longitudinale d'un blindage de broyeurs constitué d'éléments de blindage selon la présente invention.
- La figure 4a: illustre schématiquement, par une coupe transversale du broyeur, le contenu de celui-ci.

### Description d'un mode d'exécution préféré de la présente invention.

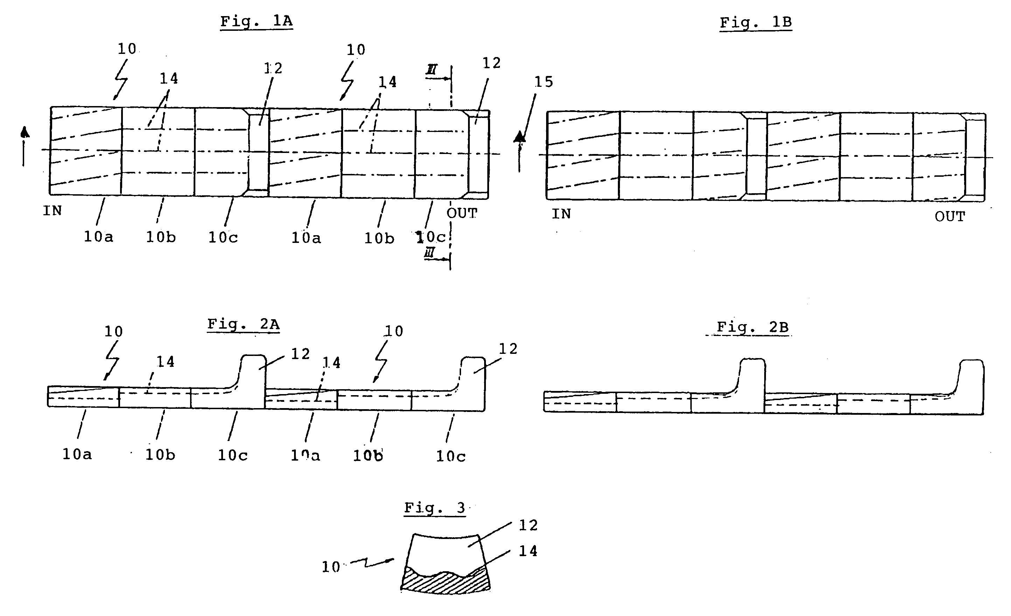

Les figures 1a et 2a représentent, chacune, deux éléments de blindage 10 en acier, fonte alliée, voire en caoutchouc, ou résine. Ces éléments 10 sont formés de plaques rectangulaires allongées, légèrement arquées, comme le montre la figure 3, avec une face extérieure lisse pour épouser la forme cylindrique de la virole du broyeur dont ils doivent former le revêtement intérieur. Ces éléments peuvent être boulonnés à la virole ou être simplement calés les uns contre les autres et être, ainsi, maintenus en place par effet de voûte.

Chaque élément présente, du côté de la sortie du broyeur, un nez transversal 12 en saillie par rapport au reste de l'élément et formant, avec les nez des autres éléments de la même couronne dans le broyeur, des anneaux circulaires. L'ensemble du blindage formé par la juxtaposition longitudinale et circonférentielle de ces éléments 10 est donc constitué d'une succession de surfaces cylindriques entrecoupées d'anneaux formés par les nez 12.

La hauteur des anneaux constitués par la succession de nez transversaux 12 en saillie, doit être inférieure à 10 % du diamètre intérieur du broyeur. A titre d'exemple, citons une hauteur de 150 mm pour un broyeur d'un diamètre de 2 m ou une hauteur donnée de 300 mm pour un broyeur de 5 m.

Selon l'un des aspect de la présente invention, chaque élément 10 comporte, sur sa face intérieure, des ondulations 14 s'étendant de l'extrémité du côté entrée du broyeur jusqu'au nez 12, symbolisées en traits interrompus sur les figures 1a et 2a et mieux visibles sur la figure 3.

Chaque élément 10 comporte, de préférence, dans le sens longitudinal, trois sections 10a, 10b et 10c. Chacune de ces sections peut être constituée d'une plaque séparée, ou bien tout l'élément 10 peut être formé d'une seule plaque, les trois sections étant définies par la forme des ondulations 14.

Les ondulations 14 de la section 10a, du côté de l'entrée, sont inclinées par rapport à la direction longitudinale ou la génératrice de la virole. Le sens de l'inclinaison des ondulations 14 par rapport au sens de rotation du broyeur, illustré par la flèche 15, est toujours tel que le côté sortie d'une onde précède, dans le sens de rotation, le côté entrée de la même onde. Il en résulte que les ondulations ont, par suite de l'effet combiné du nez radial et de l'inclinaison des ondes lors de la rotation, tendance à refouler les engins broyants en direction de l'entrée du broyeur.

Etant donné que cet effet est d'autant plus prononcé que la taille des engins broyants est plus importante, il se produit, lors la rotation, une ségrégation automatique par migration des engins broyants en direction de l'entrée.

L'angle d'inclinaison des ondulations de la section 10a par rapport à la génératrice du broyeur sera choisi n fonction de la profondeur des ondes, de la taille des engins broyants et des caractéristiques du broyeur, notamment de son diamètre et de sa vitesse de rotation. En pratique, l'angle d'inclinaison peut varier entre 10 et 45°. Un angle d'inclinaison trop petit peut occasionner un classement insuffisant des engins broyants, tandis qu'un angle trop grand peut gêner la progression de la matière à broyer et provoquer une accumulation indésirable de la charge du côté entrée.

Pour atteindre un bon compromis entre ces deux extrêmes, il est préférable que les ondulations de la section centrale 10b ne soient pas inclinées, donc parallèles à la génératrice. Il ne faut, en effet, pas oublier que les ondulations 14 contribuent aussi au relevage de la charge, ce qui est essentiel en vue d'un brassage favorable au concassage et broyage de la matière.

Dans ce contexte également, et suivant les caractéristiques du broyeur et de sa charge, les ondulations 14 de la troisième section 10c devant le nez 12 sont rectilignes, comme sur la figure 1a, ou sont légèrement inclinées comme sur la figure 1b, l'inclinaison étant dirigée dans le même sens que celle des ondulations de la section antérieure 10a. En tout état de cause, l'inclinaison des ondulations de la section 10c sera moins prononcée que celle de la section 10a et ne dépassera pas, en général, 10°.

Selon une forme d'exécution préférée, la profondeur des ondulations peut être variable d'une section à l'autre d'un élément de blindage 10. Le choix de la profondeur des ondulations 14 sera déterminée en tenant compte du fait que la profondeur des ondulations contribue essentiellement au relevage de la charge du broyeur. De préférence, les sections 10b et 10c auront des ondes de même profondeur (par exemple d'une profondeur de 20 mm) et la section 10a présentera des ondes d'une plus grande profondeur que les deux sections précédentes (par exemple une profondeur de 40 mm).

Comme on peut s'en rendre compte sur les figures, les anneaux formés par les nez 12 des éléments de blindage 10 ont, de préférence, une section légèrement trapézoïdale, en ce sens que leur face tournée vers l'entrée du broyeur est légèrement inclinée. La face des anneaux qui est tournée vers la sortie du broyeur se situe dans un plan diamétral et est, soit lisse, ou présente des ondulations prolongeant, en fait, dans le sens radial, les ondulations longitudinales de l'élément de blindage adjacent. La hauteur des anneaux sera déterminée en fonction du diamètre du broyeur et de la taille des engins broyants. L'espacement longitudinal des anneaux, c'est-à-dire la longueur des éléments de blindage 10 est fonction du diamètre du broyeur et de son coefficient de remplissage.

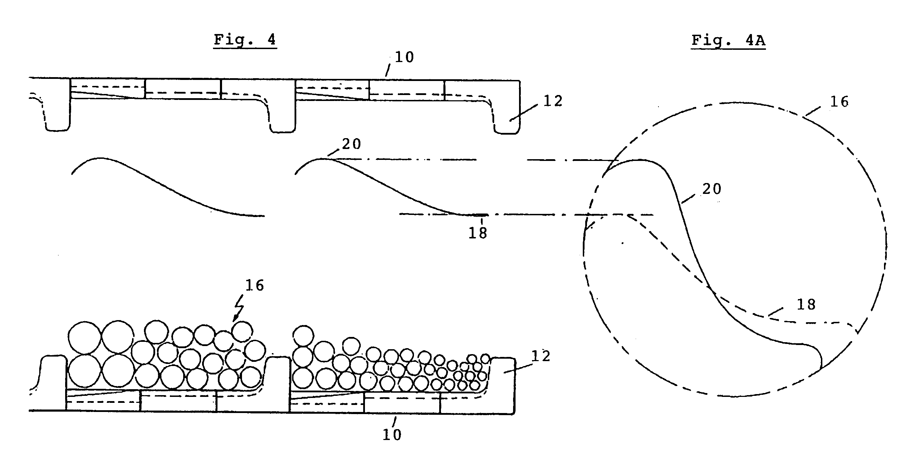

Les figures 4 et 4a illustrent schématiquement le classement des engins broyants et leur relevage par la rotation du broyeur. Comme le montre la figure 4, la taille des boulets de broyage diminue progressivement de l'entrée du broyeur en direction de la sortie vers la droite.

La figure 4a illustre schématiquement, en traits mixtes 16, le volume intérieur du broyeur. Le profil en traits interrompus 18 illustre le niveau de la charge en amont des anneaux, vu dans le sens de la progression de la matière, tandis que le profil en traits pleins 20 illustre le profil de la charge en aval des anneaux. On constate que le blindage introduit un relevage de la charge plus important au niveau de la section 10a de chaque élément de blindage 10 qu'au niveau de la section 10c. Ceci est dû d'une part à l'inclinaison des ondes et d'autre part à l'effet de coin se produisant au niveau de la face arrière des anneaux faisant partie de la section antérieure 10c des éléments de blindage 10 et éventuellement aussi à l'effet des ondulations pouvant se trouver sur la face arrière des anneaux.

Ce relevage variable sur la longueur du broyeur est favorable au broyage dans la mesure où se produisent, lors de la rotation du broyeur, dans des plans diamétraux, des cisaillements entre les différentes couches de la charge broyante et de la matière à broyer, ce qui améliore l'efficacité du broyage.

Les éléments de blindage tels que décrits ci-dessus peuvent garnir toute la surface intérieure du broyeur. Pour diminuer le poids du broyeur, il est, toutefois, possible de prévoir, dans la zone d'entrée, des éléments cylindriques ne présentant pas de nez transversal et de renoncer, ainsi, dans cette zone, aux anneaux circulaires.

## Revendications

1. Elément de blindage pour broyeur rotatif destiné à faire partie du revêtement de la paroi intérieure de la virole d'un broyeur rotatif contenant une charge d'engins broyants, comprenant une face cylindrique extérieure lisse pour épouser la surface intérieure de la virole et une face cylindrique intérieure qui comporte sur au moins une partie de sa longueur des ondulations longitudinales (14) dont au moins une section longitudinale est inclinée par rapport à la génératrice du broyeur et à son sens de rotation, caractérisé en ce que ladite face cylindrique intérieure n'engendre aucun volume tronconique et en ce qu'elle comporte un nez radial transversal (12), en saillie par rapport au reste de la face intérieure, dont la hauteur est inférieure à 10% du diamètre du broyeur.

2. Elément selon la revendication 1, caractérisé en ce que, dans le sens de la longueur, l'élément (10) comporte trois sections (10a), (10b), (10c), dont la première (10a) est pourvue d'ondulations inclinées par rapport à la génératrice, dont la seconde (10b) est pourvue d'ondulations parallèles à la génératrice du broyeur et dont la troisième (10c) est pourvue d'ondulations parallèles à la génératrice et s'étendant jusqu'au nez transversal (12).

3. Elément selon la revendication 1, caractérisé en ce que, dans le sens de la longueur, l'élément (10) comporte trois sections (10a), (10b), (10c), dont la première (10a) est pourvue d'ondulations inclinées par rapport à la génératrice, dont la seconde (10b) est pourvue d'ondulations parallèles à la génératrice du broyeur et dont la troisième (10c) est pourvue d'ondulations inclinées par rapport à la génératrice et s'étendant jusqu'au nez transversal (12).

4. Elément selon l'une quelconque des revendications précédentes, caractérisé en ce que les deuxième et troisième sections (10b et 10c) présentent des ondulations de profondeur identique et constante sur toute leur longueur, et en ce que les ondulations de la première section (10a) ont une profondeur également constante mais supérieure à celle des ondulations des deuxième et troisième sections (10b et 10c).

5. Broyeur rotatif comprenant une virole cylindrique garnie d'un blindage intérieur qui est constitué, sur au moins une partie de la longueur du broyeur, d'éléments de blindage (10) selon l'une quelconque des revendications précédentes et présentant une succession de surfaces cylindriques ondulées n'engendrant aucun volume tronconique et entrecoupées par des anneaux formés par lesdits nez transversaux (12) des éléments de blindage (10), dont la hauteur n'excède pas 10% du diamètre du broyeur (12).

## Claims

1. Lining element for rotary mills intended to form part of the lining protecting the internal wall of the shell of a rotary mill, partially filled with grinding media, the external face of said lining being smooth and cylindrical in order to match the shape of the internal surface of the shell, the internal face of said lining being cylindrical and presenting, on at least one portion of its length, longitudinal undulations (14), said undulations being, on at least one longitudinal section, inclined with reference to the generator of the mill and its direction of rotation, characterized in that the said internal cylindrical face does not induce any volume in the shape of a truncated cone and that it shows a transverse radial nose (12), projecting in relation to the rest of the internal face and the height of which is smaller than 10% of the mill diameter.

2. Element according to claim 1, characterized in that, lengthways, element (10) includes three sections (10a), (10b), (10c), the first one (10a) being provided with undulations that are inclined with reference to the generator of the mill, the second one (10b) being provided with undulations that are parallel with the same generator and the third one (10c) showing undulations that are parallel with the same generator and extending up to the transverse nose (12).

3. Element according to claim 1, characterized in that, lengthways, element (10) includes three sections (10a), (10b), (10c), the first one (10a) being provided with undulations that are inclined with reference to the generator of the mill, the second one (10b) being provided with undulations that are parallel with the same generator and the third one (10c) showing undulations that are inclined with reference to the same generator and extending up to the transverse nose (12).

4. Element according to any of the preceding claims, characterized in that the second and third sections (10b and 10c) show undulations the depth of which is identical and constant lengthways and in that the undulations of the first section (10a) are also of constant depth although deeper than the undulations of the second and third sections (10b and 10c).

5. Rotary mill made of a cylindrical shell protected inside with a lining characterized in that said lining includes, over at least one part of the length of the mill, lining elements (10) according to any of the preceding claims and in that said lining shows a sequence of cylindrical surfaces that do not induce any volume in the shape of a truncated cone, said surfaces being broken by rings made of the said transverse noses (12) of the said liners (10), the height of said noses being smaller than 10% of the mill diameter (12).

## Patentansprüche

1. Panzerungselement für eine Rotationsmühle, das dazu bestimmt ist, einen Bestandteil des Belags der inneren Wand des Mantels einer Rotationsmühle, die eine Füllung aus Mahlkörpern enthält, zu bilden, wobei dieses Panzerungselement eine glatte äußere zylindrische Fläche aufweist, um an der inneren Oberfläche des Mantels anzuliegen, und eine innere zylindrische Fläche aufweist, die auf mindestens einem Teil ihrer Länge Längswellen (14) umfaßt, von denen mindestens ein Längsabschnitt bezüglich der Mantellinie der Mühle und in ihrer Rotationsrichtung geneigt ist, dadurch gekennzeichnet, daß die innere zylindrische Fläche kein kegelstumpfförmiges Volumen erzeugt, und daß sie eine über die übrige innere Fläche vorspringende, transversale radiale Nase (12) umfaßt, deren Höhe kleiner als 10% des Durchmessers der Mühle ist.

2. Panzerungselement gemäß Anspruch 1, dadurch gekennzeichnet, daß das Element (10) in der Längsrichtung drei Abschnitte (10a), (10b), (10c) umfaßt, von denen der erste (10a) mit Wellen versehen ist, die bezüglich der Mantellinie geneigt sind, der zweite (10b) mit Wellen versehen ist, die parallel zu der Mantellinie der Mühle sind, und der dritte (10c) mit Wellen versehen ist, die parallel zu der Mantellinie sind und sich bis zu der transversalen Nase (12) erstrecken.

3. Panzerungselement gemäß Anspruch 1, dadurch gekennzeichnet, daß das Element (10) in der Längsrichtung drei Abschnitte (10a), (10b), (10c) umfaßt, von denen der erste (10a) mit Wellen versehen ist, die bezüglich der Mantellinie geneigt sind, der zweite (10b) mit Wellen versehen ist, die parallel zu der Mantellinie der Mühle sind, und der dritte (10c) mit Wellen versehen ist, die bezüglich der Mantellinie geneigt sind und sich bis zu der transversalen Nase (12) erstrecken.

4. Panzerungselement gemäß irgendeinem der vorhergehenden Ansprüche, dadurch gekennzeichnet, daß der zweite und dritte Abschnitt (10b und 10c) Wellen mit gleicher und über ihre ganze Länge konstanter Tiefe aufweisen, und daß die Wellen des ersten Abschnitts (10a) eine ebenfalls konstante Tiefe haben, die jedoch größer als die Tiefe der Wellen des zweiten und dritten Abschnitts (10b und 10c) ist.

5. Rotationsmühle, die einen zylindrischen Mantel aufweist, der mit einer inneren Panzerung ausgekleidet ist, die auf mindestens einem Teil der Länge der Mühle aus Panzerungselementen (10) gemäß irgendeinem der vorhergehenden Ansprüche besteht und eine Aufeinanderfolge von gewellten zylindrischen Oberflächen aufweist, die kein kegelstumpfförmiges Volumen erzeugen, und die unterbrochen sind durch von den transversalen Nasen (12) der Panzerungselemente (10) gebildete Nasen, deren Höhe 10% des Durchmessers der Mühle nicht übersteigt.
